# EUROPEAN PATENT APPLICATION

(11) **EP 3 581 279 A1**
(43) Date of publication of application: **18.12.2019**
(21) Application number: 19164996.1
(22) Date of filing: 25.03.2019
(51) Int. Cl.: B05C 17/005

(54) **DRIPLESS GLUE EXTRUDER**

(30) Priority: 14.05.2018 CN 201820714284 U
(71) Applicant: Hangzhou Kelong Electrical Appliance Tools Co. Ltd, Jiande, Zhejiang 311604 (CN)
(72) Inventor: Chen, Jian, Jande City, Zhengjiang, 311604 (CN); Cui, Yuqun, Jande City, Zhengjiang, 311604 (CN)
(74) Representative: 2s-ip Schramm Schneider Bertagnoll Patent- und Rechtsanwälte Part mbB

(57) **Abstract**

The present disclosure discloses a dripless glue extruder, which relates to the field of glue extruder technologies. The present disclosure solves the technical problem of glue dripping in the prior art. The dripless glue extruder in the present disclosure comprises: a housing, a gun tip, an advancing mechanism, and a handle linked with the advancing mechanism, wherein a glue loading sleeve is provided in the housing; when the handle is pressed, the advancing mechanism pushes a hot melt glue stick to advance toward the gun tip along an axial direction of the glue loading sleeve; the housing is further provided with a reset assembly sleeved on the hot melt glue stick, so that when the handle is released, the reset assembly drives, under an action of its own elastic force, the hot melt glue stick to return.

## Description

### FIELD

Embodiments of the present disclosure generally relate to the field of apparatuses for applying liquids or other fluent materials to surfaces and more particularly relate to a dripless glue extruder.

### BACKGROUND

A glue extruder is a tool that melts a solid hot melt glue stick into a liquid-state glue through electrical heating and applies the glue liquid to an object surface which needs to be bonded; due to its small size, convenience to carry, and flexibility to use, the glue extruder is a common glue extrusion tool for individuals, households, and factories.

An existing glue extruder comprises a housing, an advancing mechanism, a handle, and a gun tip mounted at a front end portion of the housing, wherein a glue loading sleeve is provided inside the housing, a feeding hole is mounted at a rear end portion of the housing, the gun tip is mounted at the front end portion of the housing, and a hot melt glue stick is inserted into the gun tip through the feeding hole and the glue loading sleeve. When the handle is pressed, it drives the advancing mechanism to actuate the hot melt glue stick to advance towards a glue dispensing port of the gun tip along an axial direction of the glue loading sleeve, and the melted glue liquid is dispensed from the glue dispensing port. After the handle is reset, because the hot melt glue stick is still at the fed position, part of the melted glue liquid may drip onto an external workbench from the glue dispensing port, which smirches the workbench and wastes the hot melt glue.

### SUMMARY

To overcome the drawbacks in the prior art, the present disclosure provides a dripless glue extruder, which may reduce waste of hot melt glue and meanwhile avoid the glue liquid from smirching the workbench.

To solve the technical problems above, the present disclosure adopts a technical solution below:

A dripless glue extruder, comprising: a housing, a gun tip, an advancing mechanism, and a handle linked with the advancing mechanism, wherein a glue loading sleeve is provided in the housing; when the handle is pressed, the advancing mechanism pushes a hot melt glue stick to advance toward the gun tip along an axial direction of the glue loading sleeve; the housing is further provided with a reset assembly sleeved on the hot melt glue stick, such that when the handle is released, the reset assembly drives, under an action of its own elastic force, the hot melt glue stick to return.

Further, the reset assembly comprises a return sleeve, an O ring, and an elastic element, wherein the return sleeve is slidingly sleeved on an outer side of the glue loading sleeve and clearance-fitted with the hot melt glue stick; the O ring is tightly clamped between a return sleeve inner sidewall and the hot melt glue stick; the elastic element is connected between the glue loading sleeve and the return sleeve so as to actuate the return sleeve and the O ring to drive the hot melt glue stick to return.

Further, the return sleeve comprises a sleeve body and a baffle plate which is formed by radial and inward extension of one end of the sleeve body proximal to the gun tip, and the O ring is disposed between end portions of the glue loading sleeve and the baffle plate; or the return sleeve comprises a sleeve body and a baffle plate which are separately formed; the baffle plate is fixed to the end of the sleeve body proximal to the gun tip; and the O ring is disposed between the end portions of the glue loading sleeve and the baffle plate.

Alternatively, the reset assembly comprises a return sleeve and an elastic element, wherein the return sleeve is a rubber element, the return sleeve being slidingly sleeved on an outer side of the glue loading sleeve and interference-fitted with the hot melt glue stick; the elastic element is connected between the glue loading sleeve and the return sleeve so as to actuate the return sleeve to drive the hot melt glue stick to return.

Further, the elastic element is a tension spring or an elastic rubber band, and the return sleeve is slidingly sleeved on a front end portion of the glue loading sleeve.

Alternatively, the elastic element is a compression spring, and the return sleeve is slidingly sleeved on a rear end portion of the glue loading sleeve.

Alternatively, the reset assembly comprises an elastic strip and a rubber ring which is mounted on the elastic strip; the elastic strip being mounted on the housing; the rubber ring is tightly clamped between the hot melt glue stick and the elastic strip; spring-back of the elastic strip drives, via the rubber ring, the hot melt glue stick to return.

Further, a first snap groove is provided in the housing; a snap sheet snap-fitted inside the first snap groove is provided on the elastic strip.

Further, an annular second snap groove is provided at an outer peripheral side of the rubber ring, the elastic strip being snap-mounted to the second snap groove.

Further, the glue extruder is a hot melt glue gun or a hot melt glue pen.

The present disclosure has the following advantages:

According to the glue extruder in the present disclosure, after the reset assembly drives the hot melt glue stick to return, a negative pressure space (i.e., the air pressure in the space is lower than the external atmosphere pressure) is formed in a head portion of the gun tip, and the melted glue liquid is suctioned into the space under the action of pressure difference; in this way, dripping and waste of the glue liquid are effectively prevented, and cleanness of the workbench is guaranteed.

The reset assembly comprises a return sleeve, an O ring, and an elastic element, wherein the return sleeve is slidingly sleeved on an outer side of the glue loading sleeve and clearance-fitted with the hot melt glue stick; the O ring is tightly clamped between a return sleeve inner sidewall and the hot melt glue stick; the elastic element is connected between the glue loading sleeve and the return sleeve so as to actuate the return sleeve and the O ring to drive the hot melt glue stick to return. According to this arrangement, under the action of the spring-back force of the elastic element, the return sleeve may drive, via the O ring, the hot melt glue stick to return, causing a certain negative pressure space formed in the head portion of the gun tip; besides, the O ring is made of a relatively ductile material, such that sliding friction between the hot melt glue stick and the O ring will not cause scraping, thereby preventing debris of the hot melt glue stick from falling off into the housing.

The return sleeve comprises a sleeve body and a baffle plate which is formed by radial and inward extension of one end of the sleeve body proximal to the gun tip, and the O ring is disposed between end portions of the glue loading sleeve and the baffle plate; or the return sleeve comprises a sleeve body and a baffle plate which are separately formed; the baffle plate is fixed to the end of the sleeve body proximal to the gun tip; and the O ring is disposed between the end portions of the glue loading sleeve and the baffle plate. According to this arrangement, the O ring may be axially limited by the baffle plate and the glue loading sleeve, which guarantees that the O ring is constantly clamped between the return sleeve and the hot melt glue stick; meanwhile, the separate forming may facilitate mold-making and manufacturing of the sleeve body and the baffle plate, thereby lowering manufacturing difficulty.

The reset assembly comprises a return sleeve and an elastic element, wherein the return sleeve is a rubber element, the return sleeve being slidingly sleeved on an outer side of the glue loading sleeve and interference-fitted with the hot melt glue stick; the elastic element is connected between the glue loading sleeve and the return sleeve so as to actuate the return sleeve to drive the hot melt glue stick to return. Such an arrangement may reduce the parts of the reset assembly, thereby further reducing the manufacturing cost.

The reset assembly comprises an elastic strip and a rubber ring which is mounted on the elastic strip; the elastic strip being mounted on the housing; the rubber ring is tightly clamped between the hot melt glue stick and the elastic strip; the elastic strip springs back to drive, via the rubber ring, the hot melt glue stick to return. According to this arrangement, when the hot melt glue stick is fed, the hot melt glue stick causes the elastic strip to be resiliently deformed via the rubber ring; after the handle is released, the elastic strip springs back and drives, via the rubber ring, the hot melt glue stick to return.

A first snap groove is provided in the housing; a snap sheet snap-fitted inside the first snap groove is provided on the elastic strip. Such an arrangement may simplify mounting of the elastic strip.

An annular second snap groove is provided at an outer peripheral side of the rubber ring, and the elastic strip is snap-fitted to the second snap groove. Such an arrangement may facilitate later disassembly and replacement of the rubber ring.

These characteristics and advantages of the present disclosure will be disclosed in detail in the preferred embodiments and the accompanying drawings below.

### BRIEF DESCRIPTION OF THE DRAWINGS

Hereinafter, the present disclosure will be described in further detail with reference to the accompanying drawings:
Fig. 1 is an explosive view of part of the structure of a glue extruder in Embodiment 1 of the present disclosure;
Fig. 2 is a sectional view of part of the structure of a glue extruder in Embodiment 1 of the present disclosure;
Fig. 3 is a schematic diagram of part of the structure of a glue extruder in Embodiment 2 of the present disclosure;

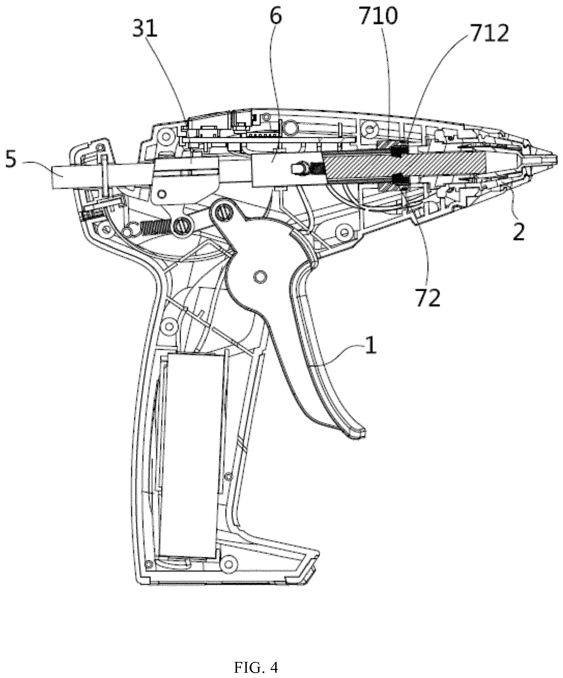

Fig. 4 is a sectional view of a glue extruder in Embodiment 2 of the present disclosure;
Fig. 5 is an explosive view of part of the structure of a glue extruder in Embodiment 5 of the present disclosure;
Fig. 6 is a sectional view of part of the structure of a glue extruder in Embodiment 5 of the present disclosure; and

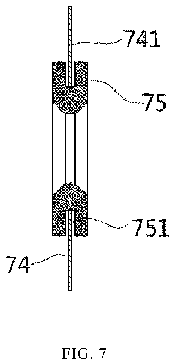

Fig. 7 is a sectional view of a reset assembly in Embodiment 5 of the present disclosure.

### DETAILED DESCRIPTION OF EMBODIMENTS

The present disclosure discloses a dripless glue extruder, comprising: a housing, a gun tip, an advancing mechanism, and a handle linked with the advancing mechanism, wherein a glue loading sleeve is provided in the housing; when the handle is pressed, the advancing mechanism pushes a hot melt glue stick to advance toward the gun tip along an axial direction of the glue loading sleeve; a reset assembly sleeved on the hot melt glue stick is further provided in the housing; when the handle is released, the reset assembly drives, under the action of its own elastic force, the hot melt glue stick to return. After the hot melt glue stick returns, a negative pressure space (i.e., the air pressure in the space is lower than the external atmosphere pressure) is formed in a head portion of the gun tip, and the melted glue liquid is suctioned into the space under the action of pressure difference; in this way, dripping and waste of the glue liquid are effectively prevented, and cleanness of the workbench is guaranteed.

Hereinafter, the technical solutions of the embodiments of the present disclosure will be explained and illustrated with reference to the accompanying drawings corresponding to the embodiments of the present disclosure. However, the embodiments are only preferred embodiments of the present disclosure, not all of them. Other embodiments obtained by those skilled in the art without exercise of inventive work based on the examples in the embodiments all fall within the protection scope of the present disclosure.

### Embodiment 1

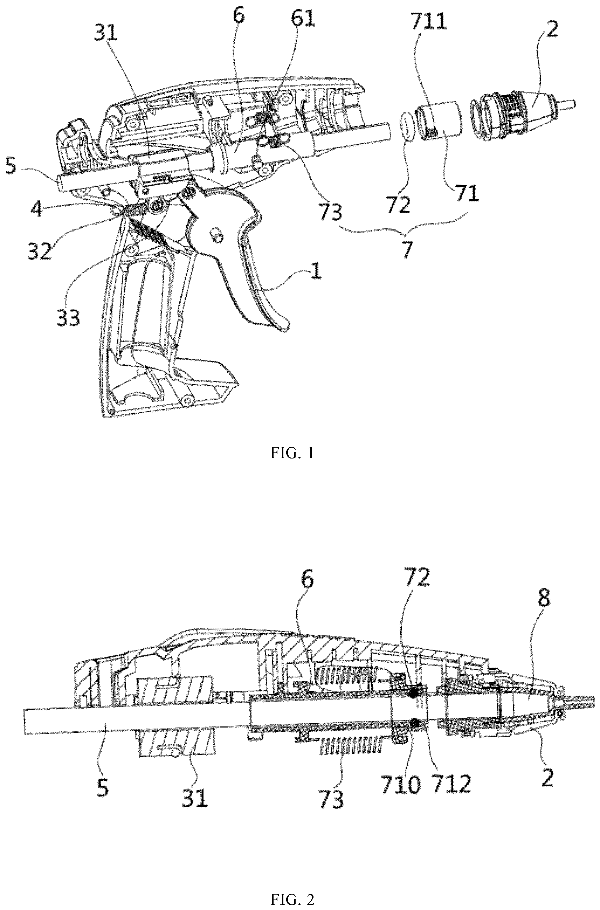

As shown in Figs. 1 and 2, the glue extruder in this embodiment is a hot melt glue gun or hot melt glue pen. With the hot melt glue gun as an example, the hot melt glue gun comprises a housing, a handle 1, a gun tip 2, and an advancing mechanism linked with the handle 1; the housing is assembled by two semi-housings; the housing comprises a gun handle and a gun bore; the handle 1 is rotatably mounted on the gun handle; the advancing mechanism comprises an advancing device 31, a fixed block 32, and a transmission rod 33, one end of the transmission rod 33 being rotatably connected to the handle 1, and the other end thereof being rotatably connected to the fixed block 32; a reset spring 4 is further connected between the fixed block 32 and a housing inner wall; an avoidance groove is provided at a bottom portion of the advancing device 31; an upper end of the fixed block 32 may move vertically and slide laterally inside the avoidance groove; and the advancing device 31 is slidingly mounted in the housing.

A glue loading sleeve 6 is further snap-mounted inside the housing of this embodiment; the gun tip 2 is mounted at a front end portion of the housing; a feeding hole is provided at a rear end portion of the housing; the feeding hole, the glue loading sleeve 6, and the gun tip 2 are co-axially arranged; a front end of the hot melt glue stick penetrates through the feeding hole and the glue loading sleeve 6 and is then inserted in the gun tip 2. To extrude the glue, the handle 1 is pressed to drive, via the transmission rod 33, the fixed block 32 to rotate; an upper end of the fixed block 32 tilts upwardly and abuts against a bottom portion of the hot melt glue stick 5 so as to fit with the advancing device 31 to tightly clamp the hot melt glue stick 5; by further pressing the handle 1, the fixed block 32 actuates the advancing device 31 to slide forwardly and drives the hot melt glue stick 5 to be fed; the front end of the hot melt glue stick 5 is heated and melted and then dispensed from a glue dispensing port of the gun tip 2. After the handle 1 is released, the reset spring 4 drives the fixed block 32 to reset, i.e., a lower end of the fixed block 32 actuates, via the transmission rod 33, the handle 1 to reset, and an upper end of the fixed block 32 falls back downwardly to be detached from the hot melt glue stick 5; meanwhile, the upper end of the fixed block 32 further actuates the advancing device 31 to move backwardly to reset. In this way, after the handle 1 is reset, the hot melt glue stick 5 is still in an initial fed position; at this point, part of the melted glue liquid may drip onto an external workbench from the glue dispensing port, which smirches the workbench and wastes the hot melt glue.

To solve the technical problem above, the glue loading sleeve 6 in this embodiment is slidingly sleeved with a reset assembly 7, the reset assembly 7 being slidingly sleeved on a front end portion of the glue loading sleeve 6; the reset assembly 7 comprises a return sleeve 71, an O ring 72, and an elastic element 73, wherein the return sleeve 71 is a resin element or a metal element; the return sleeve 71 is slidingly sleeved on an outer side of the glue loading sleeve and clearance-fitted with the hot melt glue stick 5; the O ring 72 is a rubber element or a silica gel element; the O ring 72 is clamped between a return sleeve inner sidewall and the hot melt glue stick 5; the elastic element 73 is a tension spring; the elastic element 73 is connected between the glue loading sleeve 6 and the return sleeve 71, i.e., a plurality of fixed columns 61 are arranged peripherally on a glue loading sleeve outer sidewall at uniform intervals, and a plurality of mount plates 711 are arranged peripherally on a return sleeve outer sidewall at uniform intervals; two ends of the tension spring are hooked to the fixed columns 61 and mount plates 711, respectively.

During the process of pressing the handle 1 to extrude the glue, the hot melt glue stick 5 drives, via the O ring 72, the return sleeve 71 to be advanced a certain distance forwardly. At this point, the tension spring is in a stretched state; after the handle 1 is released, the tension spring is reset under an elastic action; at this point, the tension spring pulls the return sleeve 71 to move backwardly; the return sleeve 71 drives, via the O ring 72, the hot melt glue stick 5 to return, such that a negative pressure space 8 (i.e., the air pressure inside the space is lower than an external atmosphere space) is formed in a head portion of the gun tip 2; the melted glue liquid is suctioned into the space under an action of pressure difference, which effectively prevents dripping and waste of the glue liquid and guarantees cleanness of the workbench; besides, the O ring is made of a ductile material, so that sliding friction between the hot melt glue stick 5 and the O ring will not cause scraping, thereby preventing debris of the hot melt glue stick 5 from falling into the housing.

To prevent the O ring 72 from being released outside of the return sleeve 71 during the feeding or returning process, the return sleeve 71 in this embodiment comprises a sleeve body 710 and a baffle plate 712 which is formed by radial and inward extension of one end of the sleeve body proximal to the gun tip; the baffle plate 712 and the hot melt glue stick 5 being clearance-fitted; the O ring 72 is disposed between the front end portion of the glue loading sleeve and the baffle plate 712. In this way, the O ring may be axially limited by the baffle plate 712 and the glue loading sleeve 6, which guarantees that the O ring 72 is constantly clamped between the return sleeve 71 and the hot melt glue stick 5.

It may be understood that the elastic element may also be an elastic rubber band. One end of the elastic rubber band is integrally formed with the O ring, and the other end thereof is sleeved on the fixed columns. Such an arrangement may also achieve the basic effect of this embodiment.

### Embodiment 2

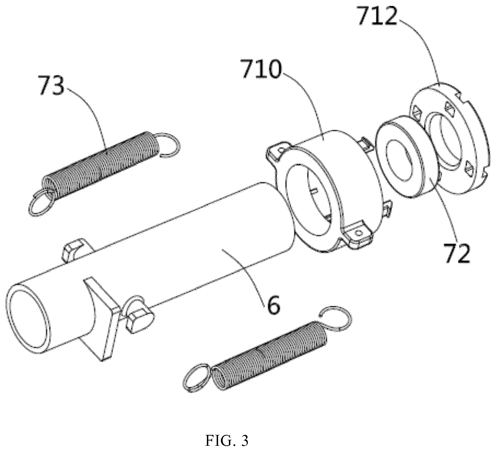

As shown in Figs. 3∼4, this embodiment differs from Embodiment 1 in that the return sleeve 71 in this embodiment comprises a sleeve body 710 and a baffle plate 712 which are separately formed; the baffle plate 712 is slindingly sleeved on the hot melt glue stick 5; an inner diameter of the baffle plate 712 is smaller than an inner diameter of the sleeve body but greater than the outer diameter of the hot melt glue stick 5; one end of the sleeve body 710 proximal to the gun tip is provided with an axially extending snap-joint; a snap-fitting hole is provided on the baffle plate 712; the snap-joint is snap-fitted to the snap-fitting hole, such that the baffle plate is fixed to one end of the sleeve body proximal to the gun tip; and the O ring 72 is disposed between the end portions of the glue loading sleeve and the baffle plate 712.

It may be understood that the snap-joint may be further provided on the baffle plate, while the snap-fitting hole is provided on the sleeve body. Such an arrangement may also implement snap-fitting fixation between the sleeve body and the baffle plate; or, the baffle plate is fixed to the sleeve body by adhesion or bolt connection.

### Embodiment 3

This embodiment differs from Embodiment 1 in that the reset assembly in this embodiment is slidingly sleeved on a rear end portion of the glue loading sleeve 6. Specifically, the return sleeve 71 is sleeved on a rear end portion of the glue loading sleeve 6; the O ring 72 is clamped between a return sleeve inner sidewall and the hot melt glue stick 5; the elastic element 73 is a compression spring, and the elastic element 73 is connected between the glue loading sleeve 6 and the return sleeve 71.

During the process of glue extrusion by pressing the handle 1, the hot melt glue stick 5 drives, via the O ring 72, the return sleeve 71 to be advanced a certain distance forwardly. At this point, the compression spring is in a compressed state; after the handle 1 is released, the compression spring is reset under an elastic action; at this point, the compression spring pulls the return sleeve 71 to move backwardly; the return sleeve 71 drives, via the O ring 72, the hot melt glue stick 5 to return, so that a negative pressure space 8 is formed in a head portion of the gun tip; the melted glue liquid is suctioned into the space under an action of pressure difference, which effectively prevents dripping and waste of the glue liquid and guarantees cleanness of the workbench.

### Embodiment 4

This embodiment differs from Embodiments 1-3 that the reset assembly in this embodiment comprises a return sleeve and an elastic element, wherein the return sleeve is a rubber element, the return sleeve being slidingly sleeved on an outer side of the glue loading sleeve, end portions of the return sleeve extending radially and inwardly to form a pressing plate, the pressing plate being interference-fitted with the hot melt glue stick. When the return sleeve is slidingly sleeved on a front end portion of the glue loading sleeve, the elastic element is a tension spring, the tension spring being connected between the glue loading sleeve and the return sleeve, so that when the tension spring is reset, the tension spring drives the return sleeve to return, while the return sleeve drives, via the pressing plate, the hot melt glue stick to return. When the return sleeve is slidingly sleeved to a rear end portion of the glue loading sleeve, the elastic element is a compression spring, the compression spring being connected between the glue loading sleeve and the return sleeve, so that when the compression spring is reset, the compression spring drives the return sleeve to return, while the return sleeve drives, via the pressing plate, the hot melt glue stick to return. The two arrangements above may reduce the parts of the reset assembly, thereby further reducing the manufacturing cost.

### Embodiment 5

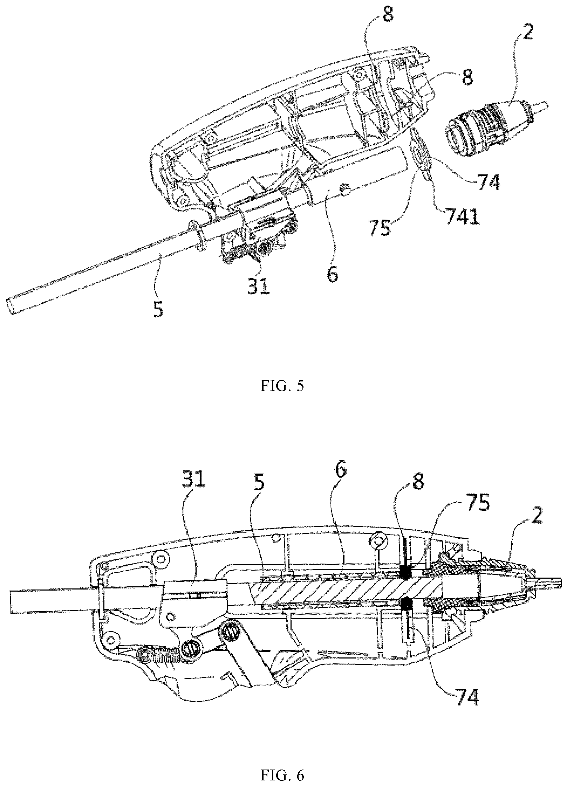

As shown in Figs. 5∼7, the reset assembly 7 in this embodiment further comprises an elastic strip 74 and a rubber ring 75; the elastic strip 74 is mounted on the housing; the elastic strip 74 is disposed in front of or behind the glue loading sleeve. With disposing the elastic strip 74 in front of the glue loading sleeve as an example, a first snap groove 8 is provided at the top portion and the bottom portion of the housing, respectively; the upper and lower ends of the elastic strip 74 are provided with a snap sheet 741 snap-fitted in the first snap groove 8; the rubber ring 75 is tightly clamped between the hot melt glue stick 5 and the elastic strip 74. When pressing the handle 1 to feed the hot melt glue stick 5, the hot melt glue stick 5 drives the rubber ring 75 to move forwardly; the rubber ring 5 forces the elastic strip 74 to be elastically deformed, so that after the handle 1 is released, the elastic strip 74 springs back to drive, via the rubber ring 75, the hot melt glue stick 5 to return.

To facilitate later disassembly and replacement of the rubber ring 75, an annular second snap groove 751 is provided at an outer periphery of the rubber ring 75, and the elastic strip 74 is snap-mounted to the second snap groove 751.

What have been described above are only preferred embodiments of the present disclosure; however, the protection scope of the present disclosure is not limited thereto. A person skilled in the art should understand that the present disclosure includes, but not limited to the contents described in the drawings and the preferred embodiments. Any modifications without departing from the functions and structural principles of the present disclosure will be included within the scope of the claims.

## Claims

1. A dripless glue extruder, comprising: a housing, a gun tip, an advancing mechanism, and a handle linked with the advancing mechanism, wherein a glue loading sleeve is provided in the housing; when the handle is pressed, the advancing mechanism pushes a hot melt glue stick to advance toward the gun tip along an axial direction of the glue loading sleeve; the housing is further provided with a reset assembly sleeved on the hot melt glue stick, so that when the handle is released, the reset assembly drives, under an action of its own elastic force, the hot melt glue stick to return.

2. The dripless glue extruder according to claim 1, wherein the reset assembly comprises a return sleeve, an O ring, and an elastic element, wherein the return sleeve is slidingly sleeved on an outer side of the glue loading sleeve and clearance-fitted with the hot melt glue stick; the O ring is tightly clamped between a return sleeve inner sidewall and the hot melt glue stick; and the elastic element is connected between the glue loading sleeve and the return sleeve so as to actuate the return sleeve and the O ring to drive the hot melt glue stick to return.

3. The dripless glue extruder according to claim 2, wherein the return sleeve comprises a sleeve body and a baffle plate which is formed by radial and inward extension of one end of the sleeve body proximal to the gun tip, and the O ring is disposed between end portions of the glue loading sleeve and the baffle plate; or the return sleeve comprises a sleeve body and a baffle plate which are separately formed; the baffle plate is fixed to the end of the sleeve body proximal to the gun tip; and the O ring is disposed between the end portions of the glue loading sleeve and the baffle plate.

4. The dripless glue extruder according to claim 1, wherein the reset assembly comprises a return sleeve and an elastic element; the return sleeve is a rubber element, the return sleeve being slidingly sleeved on an outer side of the glue loading sleeve and interference-fitted with the hot melt glue stick; and the elastic element is connected between the glue loading sleeve and the return sleeve so as to actuate the return sleeve to drive the hot melt glue stick to return.

5. The dripless glue extruder according to any one of claims 2∼4, wherein the elastic element is a tension spring or an elastic rubber band, and the return sleeve is slidingly sleeved on a front end portion of the glue loading sleeve.

6. The dripless glue extruder according to any one of claims 2-4, wherein the elastic element is a compression spring, and the return sleeve is slidingly sleeved on a rear end portion of the glue loading sleeve.

7. The dripless glue extruder according to claim 1, wherein the reset assembly comprises an elastic strip and a rubber ring which is mounted on the elastic strip; the elastic strip being mounted on the housing; the rubber ring is tightly clamped between the hot melt glue stick and the elastic strip; and spring-back of the elastic strip drives, via the rubber ring, the hot melt glue stick to return.

8. The dripless glue extruder according to claim 7, wherein a first snap groove is provided in the housing; and a snap sheet snap-fitted inside the first snap groove is provided on the elastic strip.

9. The dripless glue extruder according to claim 7, wherein an annular second snap groove is provided at an outer peripheral side of the rubber ring, the elastic strip being snap-mounted to the second snap groove.

10. The dripless glue extruder according to claim 1, wherein the glue extruder is a hot melt glue gun or a hot melt glue pen.
